# EUROPEAN PATENT APPLICATION

(11) **EP 4 675 524 A1**
(43) Date of publication of application: **07.01.2026**
(21) Application number: 25153924.3
(22) Date of filing: 24.01.2025
(51) Int. Cl.: G06Q 10/06, G06Q 10/0631, G06Q 10/20

(54) **INFORMATION PROCESSING SYSTEM, PROGRAM, AND INFORMATION PROCESSING METHOD**

(30) Priority: 04.07.2024 JP 2024108178
(71) Applicant: FUJIFILM Business Innovation Corp., Minato-ku Tokyo (JP)
(72) Inventor: YOKOTA, Masaru, Yokohama-shi, Kanagawa (JP)
(74) Representative: Kurig, Thomas

(57) **Abstract**

An information processing system includes one or more processors configured to: predict component names having a possibility of being used for maintenance of plural devices determined in advance and quantities of the component names; and notify, in a case where a maintenance request is received for a device among the plural devices, a person in charge, who is in charge of maintenance work for the device and who is determined from among plural workers, of information indicating a component name and a quantity of the component name for the maintenance work and information indicating a component name and a quantity of the component name based on a result of the prediction, as details of components to be brought.

## Description

### BACKGROUND OF THE INVENTION

### (i) Field of the Invention

The present invention relates to an information processing system, a program, and an information processing method.

### (ii) Description of Related Art

For example, JP2019-211940A discloses a maintenance system in which one or more devices including components as maintenance targets, a plurality of terminals held by a plurality of workers who perform component replacement work, and a server are connected by a communication network, in which the server includes an information management unit that acquires device information including component replacement request information from the device and acquires worker information including, possession component information possessed by the worker who holds the terminal and operation status information of the worker, from the terminals, and a visiting route determination unit that, based on the device information acquired from the one or more devices and the worker information acquired from the plurality of terminals, specifies one or more workers who perform the replacement work, determines a visiting route for instructing the one or more workers to perform the replacement work by designating the devices of a visiting place, and notifies the terminals held by the one or more workers of the visiting route.

### SUMMARY OF THE INVENTION

In a case where a request for maintenance of the device is received, a person in charge of the maintenance work of the device brings a necessary component from a storage place in which the components are stored, and performs the maintenance work.

Here, it is assumed that there may be a case where a component, which is brought for the maintenance work but is not used, is present, or there may be a case where the brought components are insufficient for performing the maintenance work due to sudden trouble. In such a case, in a case where the persons in charge can exchange the components with each other, the person in charge with an insufficient component does not have to go to the storage place to take the components, but, in a case where there is no person in charge who can exchange the components, the person in charge has to return to the storage place.

On the other hand, in a case where components having a possibility of being used for the maintenance of a plurality of devices determined in advance are predicted, and the person in charge brings a surplus component in accordance with a result of the prediction, the number of times of returning to the storage place can be reduced for the entire person in charge, and it is possible to improve the efficiency of the maintenance work. However, there is a limit to the components that can be brought by the person in charge, and it is difficult to bring a large quantity of the components. In addition, in a case where a place in which the components are exchanged is close to the storage place, the person in charge can return to the storage place and pick up the components in a short time, so the improvement in efficiency by bringing the components is small.

An object of the present disclosure is to improve efficiency of maintenance work as a whole as compared with a case where a configuration is not adopted in which components having a possibility of being used for maintenance of a plurality of devices determined in advance are predicted, and a person in charge brings the components in accordance with a result of the prediction.

According to a first aspect of the present disclosure, there is provided an information processing system including: one or more processors configured to: predict component names having a possibility of being used for maintenance of a plurality of devices determined in advance and quantities of the component names; and notify, in a case where a maintenance request is received for a device among the plurality of devices, a person in charge, who is in charge of maintenance work for the device and who is determined from among a plurality of workers, of information indicating a component name and a quantity of the component name for the maintenance work and information indicating a component name and a quantity of the component name based on a result of the prediction, as details of components to be brought.

According to a second aspect of the present disclosure, there is provided the information processing system according to the first aspect, in which the information indicating the component name and the quantity of the component name based on the result of the prediction may indicate a component name having a subtracted quantity equal to or more than 1 and a quantity of the component name, the subtracted quantity being calculated, for each component name, by subtracting a quantity of use in the received maintenance request from the quantity in the result of the prediction.

According to a third aspect of the present disclosure, there is provided the information processing system according to the second aspect, in which the result of the prediction may indicate a component name having a possibility of being used in the maintenance on a day of the prediction, and the quantity of use in the received maintenance request may be a quantity of use in the maintenance request received on the day of the prediction.

According to a fourth aspect of the present disclosure, there is provided the information processing system according to the second aspect, in which the result of the prediction may indicate a component name having a possibility of being used in the maintenance on a day of the prediction, and the quantity of use in the received maintenance request may be a value obtained by adding together a quantity in which the maintenance work is performed on the day of the prediction and a quantity in which the maintenance work is scheduled to be performed on the day of the prediction.

According to a fifth aspect of the present disclosure, there is provided the information processing system according to any one of the first to fourth aspects, in which the quantity in the information indicating the component name and the quantity of the component name based on the result of the prediction may be less than an amount of components that the person in charge is able to bring.

According to a sixth aspect of the present disclosure, there is provided the information processing system according to any one of the first to fourth aspects, in which, in a case where the components to be brought are brought from a storage place in which the components are stored, the quantity in the information indicating the component name and the quantity of the component name based on the result of the prediction may be less than a storage amount in the storage place.

According to a seventh aspect of the present disclosure, there is provided the information processing system according to any one of the first to sixth aspects, in which the plurality of devices determined in advance may be devices within a geographical range that does not include a storage place in which components are stored.

According to an eighth aspect of the present disclosure, there is provided the information processing system according to the seventh aspect, in which the geographical range may be separated from the storage place by a predetermined distance or more.

According to a ninth aspect of the present disclosure, there is provided the information processing system according to the seventh aspect, in which the geographical range may be a range in which a movement distance or a movement time in a case of movement from the storage place as a start point is equal to or more than a predetermined value.

According to a tenth aspect of the present disclosure, there is provided a program causing an information processing system to implement: a function of predicting component names having a possibility of being used for maintenance of a plurality of devices determined in advance and quantities of the component names; and a function of notifying, in a case where a maintenance request is received for a device among the plurality of devices, a person in charge, who is in charge of maintenance work for the device and who is determined from among a plurality of workers, of information indicating a component name and a quantity of the component name for the maintenance work and information indicating a component name and a quantity of the component name based on a result of the prediction, as details of components to be brought.

According to an eleventh aspect of the present disclosure, there is provided an information processing method including: predicting component names having a possibility of being used for maintenance of a plurality of devices determined in advance and quantities of the component names; and notifying, in a case where a maintenance request is received for a device among the plurality of devices, a person in charge, who is in charge of maintenance work for the device and who is determined from among a plurality of workers, of information indicating a component name and a quantity of the component name for the maintenance work and information indicating a component name and a quantity of the component name based on a result of the prediction, as details of components to be brought.

According to the first aspect of the present invention, the efficiency of the maintenance work can be improved as a whole as compared with a case where a configuration is not adopted in which components having a possibility of being used for maintenance of a plurality of devices determined in advance are predicted, and a person in charge brings the components in accordance with a result of the prediction.

According to the second aspect of the present invention, the processing burden can be reduced as compared with a case where a configuration is not adopted in which the information indicating the component name and the quantity of the component name based on the result of the prediction indicates a component name having a subtracted quantity equal to or more than 1 and a quantity of the component name, the subtracted quantity being calculated, for each component name, by subtracting a quantity of use in the received maintenance request from the quantity in the result of the prediction.

According to the third aspect of the present invention, the processing burden can be reduced as compared with a case where a configuration is not adopted in which the result of the prediction indicates a component name having a possibility of being used in the maintenance on a day of the prediction, and the quantity of use in the received maintenance request is a quantity of use in the maintenance request received on the day of the prediction.

According to the fourth aspect of the present invention, the accuracy of the prediction can be improved as compared with a case where a configuration is not adopted in which the result of the prediction indicates a component name having a possibility of being used in the maintenance on a day of the prediction, and the quantity of use in the received maintenance request is a value obtained by adding together a quantity in which the maintenance work is performed on the day of the prediction and a quantity in which the maintenance work is scheduled to be performed on the day of the prediction.

According to the fifth aspect of the present invention, the burden on the person in charge who brings the components can be reduced as compared with a case where a configuration is not adopted in which the quantity in the information indicating the component name and the quantity of the component name based on the result of the prediction is less than an amount of components that the person in charge is able to bring.

According to the sixth aspect of the present invention, the burden on the person in charge can be reduced as compared with a case where a configuration is not adopted in which, in a case where the components to be brought are brought from a storage place in which the components are stored, the quantity in the information indicating the component name and the quantity of the component name based on the result of the prediction is less than a storage amount in the storage place.

According to the seventh aspect of the present invention, the decrease in the efficiency of the maintenance work can be suppressed as compared with a case where a configuration is not adopted in which the plurality of devices determined in advance are devices within a geographical range that does not include a storage place in which components are stored.

According to the eighth aspect of the present invention, the geographical range can be easily set as compared with a case where a configuration is not adopted in which the geographical range is separated from the storage place by a predetermined distance or more.

According to the ninth aspect of the present invention, the geographical range can be set in accordance with an actual situation as compared with a case where a configuration is not adopted in which the geographical range is a range in which a movement distance or a movement time in a case of movement from the storage place as a start point is equal to or more than a predetermined value.

According to the tenth aspect of the present invention, the efficiency of the maintenance work can be improved as a whole as compared with a case where a configuration is not adopted in which components having a possibility of being used for maintenance of a plurality of devices determined in advance are predicted, and a person in charge brings the components in accordance with a result of the prediction.

According to the eleventh aspect of the present invention, the efficiency of the maintenance work can be improved as a whole as compared with a case where a configuration is not adopted in which components having a possibility of being used for maintenance of a plurality of devices determined in advance are predicted, and a person in charge brings the components in accordance with a result of the prediction.

### BRIEF DESCRIPTION OF THE DRAWINGS

Exemplary embodiment(s) of the present invention will be described in detail based on the following figures, wherein:
Fig. 1 is a diagram showing an overall configuration example of an information processing system to which the present exemplary embodiment is applied;
Fig. 2 is a block diagram showing an example of a hardware configuration of a server device according to the present exemplary embodiment;
Fig. 3 is a functional block diagram of a CPU;
Fig. 4 is a schematic configuration diagram of an image forming device that is a target of a maintenance request;
Fig. 5 is a flowchart showing a processing procedure in the server device that issues an instruction to a person in charge who responds to a case where a malfunction has occurred in the image forming device of a customer;
Fig. 6 is a flowchart showing an example of prediction processing of step S101 in Fig. 5;
Fig. 7 is a flowchart showing an example of person-in-charge specifying processing of step S 102 in Fig. 5;
Fig. 8 is a flowchart showing an example of transit point selection processing of step S103 in Fig. 5;
Figs. 9A to 9D are diagrams showing an example of the transit point selection processing, in which Fig. 9A is a diagram showing creation of a list of insufficient components, and Figs. 9B to 9D are diagrams showing an example of a destination list;
Fig. 10 is a flowchart showing an example of addition processing of step S105 in Fig. 5;
Figs. 11A and 11B are diagrams showing the addition processing, in which Fig. 11A is a diagram showing processing of step S504 in Fig. 10, and Fig. 11B is a diagram showing processing of step S506 in Fig. 10;
Fig. 12 is a flowchart showing an example of acquisition processing of step S106 in Fig. 5;
Fig. 13 is a diagram showing surplus acquired components;
Fig. 14 is a flowchart showing an example of determination processing of step S107 in Fig. 5;
Figs. 15A to 15D are diagrams showing the determination processing, in which Fig. 15A is a diagram showing processing of step S701 in Fig. 14, Fig. 15B is a diagram showing processing of step S702 in Fig. 14, Fig. 15C is a diagram showing processing of step S703 in Fig. 14, and Fig. 15D is a diagram showing processing of step S709 in Fig. 14;
Fig. 16 is a diagram showing information in a case where a transportable amount is determined in step S708 in Fig. 14;
Fig. 17 is a diagram showing a brought-in component list;
Fig. 18 is a diagram showing an instruction displayed on a display unit of a terminal device; and
Fig. 19 is a diagram showing an example of a predetermined area.

### DETAILED DESCRIPTION OF THE INVENTION

Hereinafter, an exemplary embodiment of the present invention will be described with reference to the drawings.

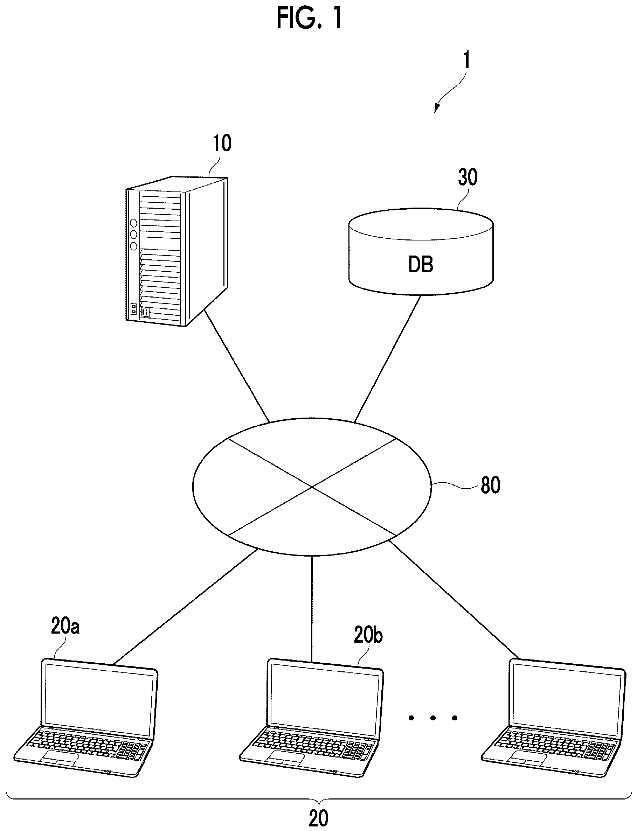

Fig. 1 is a diagram showing an overall configuration example of an information processing system 1 to which the present exemplary embodiment is applied.

The information processing system 1 according to the present exemplary embodiment is configured by connecting, via a communication line 80, a server device 10 that manages maintenance of an image forming device used by a customer, terminal devices 20 (20a, 20b, ...) of workers who perform maintenance work of the image forming device, and a database 30. In Fig. 1, the database is denoted by "DB".

The communication line 80 is, for example, a line, such as a local area network (LAN) or the Internet, and is used for information communication between the server device 10 and the terminal device 20 and between the server device 10 and the database 30. However, a network may be a composite type of the LAN and the Internet.

In the information processing system 1 according to the present exemplary embodiment, in a case where a maintenance request is received from the customer, the server device 10 determines a person in charge from among a plurality of workers, and provides maintenance information to the determined person in charge, via the terminal device 20. The person in charge performs the maintenance work of the image forming device of the customer based on the maintenance information provided to the terminal device 20.

The maintenance information described here includes information from the customer and information indicating contents of the maintenance work. The information from the customer includes information for specifying the image forming device that is a target of the received maintenance request, and trouble contents. As the information indicating the contents of the maintenance work, a response manual, contents of past maintenance work, or the like stored in the database 30 is determined.

The image forming device is an example of a device.

The server device 10 is a device that receives the maintenance request from the customer, determines a response to the received maintenance request as the maintenance information, and transmits the maintenance information to the terminal device 20 of the person in charge. There is a case where the reception of the maintenance request in the server device 10 is performed by language analysis on call contents of a call from the customer, in addition to a case where a customer service or a customer center that receives the call from the customer performs the reception by inputting the call content from an input unit, such as a keyboard.

The maintenance request received by the server device 10 is stored in the database 30 together with the maintenance information. In addition, a maintenance report indicating the contents of actually performed maintenance work is also stored in the database 30.

The server device 10 is implemented by, for example, a computer device. The server device 10 may be configured by a single computer, or may be implemented by distribution processing by a plurality of computers.

The terminal device 20 is a device including at least a display unit that displays the maintenance information from the server device 10, and an input unit that inputs the maintenance report by the person in charge.

The terminal device 20 includes a computer device. Examples of the terminal device 20 include a desktop personal computer, a laptop personal computer, a tablet-type information terminal, a smartphone, and a game machine.

A hardware configuration of the server device 10 will be described.

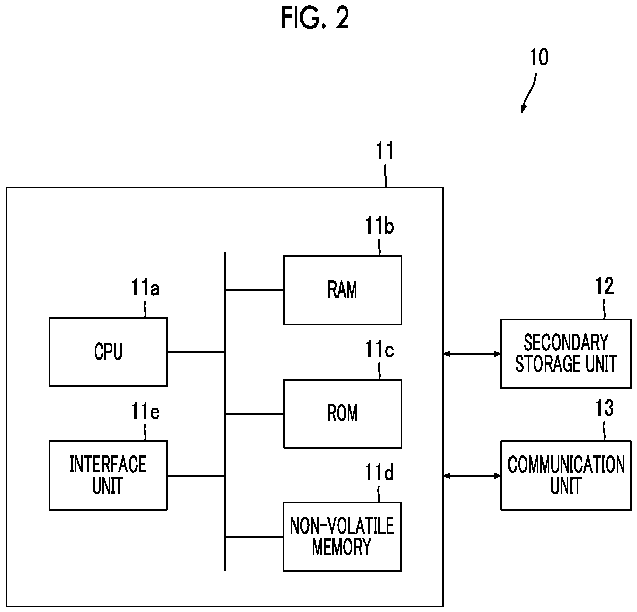

Fig. 2 is a block diagram showing an example of the hardware configuration of the server device 10 according to the present exemplary embodiment.

The server device 10 includes an arithmetic processing unit 11 that executes digital arithmetic processing in accordance with a program for creating the maintenance information, a secondary storage unit 12 in which the maintenance information and the like are recorded, and a communication unit 13 that transmits and receives information via the communication line 80 (see Fig. 1).

The secondary storage unit 12 is implemented, for example, by a known information storage device, such as a hard disk drive (HDD), a semiconductor memory, or a magnetic tape.

The arithmetic processing unit 11 is provided with a CPU 11a as an example of a processor. The CPU 11a controls the entire server device 10.

The arithmetic processing unit 11 includes a RAM 11b that is used as a work memory or the like of the CPU 11a, and a ROM 11c in which the program or the like to be executed by the CPU 11a is stored.

In addition, the arithmetic processing unit 11 includes a non-volatile memory 11d that is rewritable and can hold data even in a case where a power supply is interrupted, and an interface unit 11e that controls each unit, such as the communication unit 13, connected to the arithmetic processing unit 11.

The non-volatile memory 11d is configured by, for example, an SRAM or a flash memory backed up by a battery, and information on a file, correspondence information for associating the files with each other, and the like are stored in the non-volatile memory 11d.

Further, the secondary storage unit 12 stores the program to be executed by the arithmetic processing unit 11, in addition to files and the like.

In the present exemplary embodiment, the arithmetic processing unit 11 reads the program stored in the secondary storage unit 12, to execute each processing of the server device 10. The arithmetic processing unit 11, the secondary storage unit 12, and the communication unit 13 are connected through a bus or a signal line.

In a case where the maintenance request from the customer is received, the server device 10 determines the person in charge of performing the maintenance work, and creates the maintenance information. The server device 10 transmits the maintenance information to the terminal device 20 of the determined person in charge.

In the present exemplary embodiment, the secondary storage unit 12 stores the maintenance request and the like. The communication unit 13 transmits the maintenance information to the terminal device 20.

The program to be executed by the CPU 11a provided in the server device 10 can be provided to the server device 10 in a state of being stored in a computer-readable recording medium. The recording medium described here is, for example, a magnetic recording medium (magnetic tape, magnetic disk, and the like), an optical recording medium (optical disk and the like), a magneto-optical recording medium, or a semiconductor memory.

In addition, the program to be executed by the CPU 11a may be provided to the server device 10 by communication means, such as the Internet.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

Next, a functional block diagram of the CPU 11a of the server device 10 will be described.

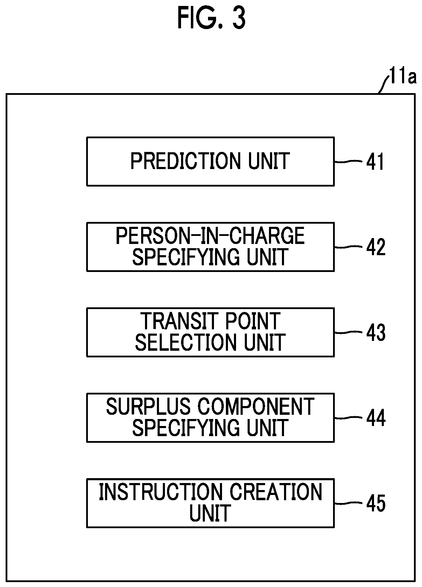

Fig. 3 is a functional block diagram of the CPU 11a.

As shown in Fig. 3, the CPU 11a includes a prediction unit 41, a person-in-charge specifying unit 42, a transit point selection unit 43, a surplus component specifying unit 44, and an instruction creation unit 45.

The prediction unit 41 predicts a component name and a count or a quantity of the component name, as a malfunctioning component having a possibility of being replaced in a case of responding to the received maintenance request of the customer. The malfunctioning component predicted by the prediction unit 41 may be referred to as a necessary component.

The person-in-charge specifying unit 42 specifies the person in charge who is in charge of the maintenance work corresponding to the maintenance request from among the plurality of workers.

The transit point selection unit 43 selects a transit point including a customer's place handled by the person in charge and a place passed through until the person in charge goes to the customer's place. As such a transit point, a warehouse that stores the necessary components, a place in which another worker who has the necessary components is present, and the like are considered. The transit point may be referred to as a destination.

The warehouse is an example of a storage place in which the components are stored.

The surplus component specifying unit 44 specifies a surplus component that is a component brought because there is a possibility that the component will be necessary in a case where the maintenance request is received in the future. The surplus component is not a component necessary for the maintenance work corresponding to the maintenance request received this time, and is not the necessary component.

The instruction creation unit 45 creates an instruction including details of the brought-in components obtained by adding together the necessary components and the surplus components and the selected transit point. Such an instruction is transmitted to the terminal device 20 of the person in charge as data, and the contents of the instruction are displayed on the display unit of the terminal device 20 as described later. The person in charge acts in accordance with the instruction.

Next, an example of an image forming device 100 that is a target of the maintenance request will be described.

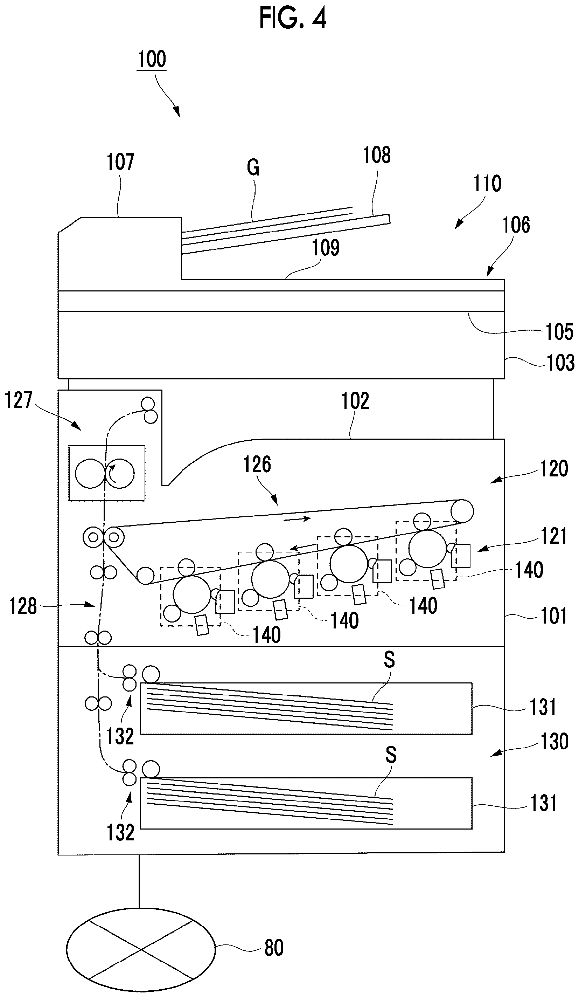

Fig. 4 is a schematic configuration diagram of the image forming device 100 that is a target of the maintenance request.

As shown in Fig. 4, the image forming device 100 includes a document reading device 110 that reads information on a document G, and an image forming section 120 that forms an image on recording paper S based on the information (read image) on the document read by the document reading device 110. In addition, the image forming device 100 includes a feeding section 130 that sends out the recording paper S to be supplied to the image forming section 120. The image forming device 100 accommodates the image forming section 120 and the feeding section 130 in a main body 101, and has the document reading device 110 disposed above the main body 101. The main body 101 includes, on an upper surface portion, a discharge/accommodation section 102 that discharges and accommodates the recording paper S on which the image is formed.

The document reading device 110 includes a housing 103. In addition, the document reading device 110 includes a document stand 105 having light transmittance on an upper surface portion of the housing 103 on which the document G is placed. In addition, the document reading device 110 includes a document cover 106 that covers the document stand 105 and that can be opened and closed with respect to the housing 103.

The document cover 106 is provided with an automatic document feeding section 107 that transports the document G to a reading position and discharges the read document G, a document tray 108 on which the document G transported from the automatic document feeding section 107 is placed, and an accommodation section 109 that accommodates the document G discharged from the automatic document feeding section 107.

The image forming section 120 includes an image forming unit 121 that forms toner images of respective colors of yellow (Y), magenta (M), cyan (C), and black (K) by using, for example, an electrophotographic method. The image forming section 120 includes an intermediate transfer unit 126 that transports the toner image, which is formed by the image forming unit 121, to transfer the toner image to the recording paper S. The image forming section 120 includes a fixing unit 127 that fixes the toner image transferred to the recording paper S from the intermediate transfer unit 126.

The image forming unit 121 includes photosensitive units 140 corresponding to the respective colors, which are shown by a broken line. Each of the photosensitive units 140 is attachable to and detachable from the main body 101, and a user can perform an attachment/detachment operation of the photosensitive unit 140.

The feeding section 130 includes a drawer type container 131 in which a plurality of pieces of the recording paper S consisting of a predetermined size or type can be placed, and a sending-out device 132 that sends out the recording paper S accommodated in the container 131 to a transport path one by one. A supply transport path 128 that transports the recording paper S sent out from the feeding section 130 to a secondary transfer position is disposed between the feeding section 130 and the image forming section 120.

The image forming device 100 can be connected to the server device 10 and the terminal device 20 (see Fig. 1) via the communication line 80. The image forming device 100 holds various logs or data of a sensor of the image forming device 100. The image forming device 100 transmits sensor data held in the image forming device 100 in response to, for example, a request from the server device 10.

The performance of the image forming device 100 is maintained by performing regular maintenance work, and there is a case where the image forming device 100 suddenly does not operate normally and cannot be used or a case where a defect has occurred in the image formed on the recording paper S. In a case where such a malfunction has occurred, the maintenance work for replacing the component that causes the malfunction is necessary. Therefore, in a case of the malfunction has occurred, in a case where a company that provides a maintenance service for the image forming device 100 is contacted, the person in charge brings the components necessary for the maintenance and performs the maintenance work on the image forming device 100 of the customer.

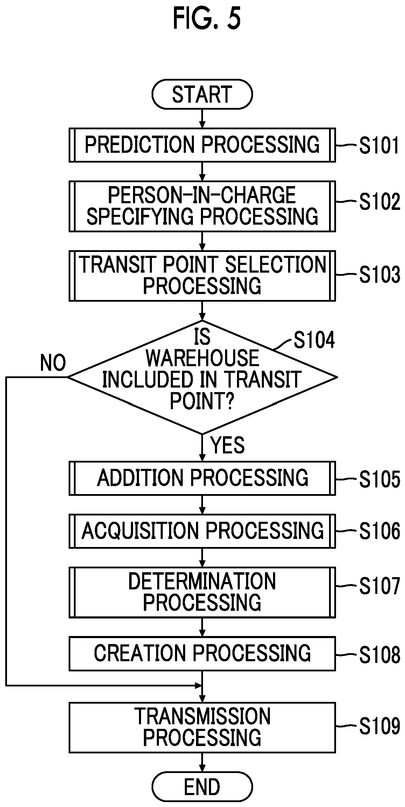

Next, a processing procedure in the server device 10 for issuing an instruction to the person in charge who responds to a case where the malfunction has occurred in the image forming device 100 of the customer will be described with reference to Fig. 5.

Fig. 5 is a flowchart showing a processing procedure in the server device 10 for issuing the instruction to the person in charge who responds to a case where the malfunction has occurred in the image forming device 100 of the customer.

In the processing example shown in Fig. 5, first, prediction processing is performed (step S101). Such prediction processing is processing of predicting the necessary components having a possibility of being used in a case of performing the maintenance of the image forming device 100 in response to the occurrence of the malfunction. The prediction processing is performed by the prediction unit 41 (see Fig. 3) described above.

After the prediction processing, person-in-charge specifying processing is performed (step S102). The person-in-charge specifying processing is processing of specifying the person in charge who is in charge of the current maintenance work from among the plurality of workers who perform the maintenance work. The specified person in charge contacts the customer of the image forming device 100 that has malfunctioned or visits the customer's place to perform a repair response. The person-in-charge specifying processing is performed by the person-in-charge specifying unit 42 (see Fig. 3) described above.

In addition, transit point selection processing is performed (step S103). Such a transit point selection processing is processing of selecting a transit point in a case where the specified person in charge goes to the customer's place. The transit point may include the warehouse that is the storage place in which the components are stored, and may include a customer's place in which another worker performs the maintenance work. In addition, as the transit point, the customer's place in which the worker performs the maintenance work as the person in charge may be included, and it is also considered that there are a plurality of such customer's places.

The transit point selection processing is performed by the transit point selection unit 43 (see Fig. 3) described above.

Then, it is determined whether or not the warehouse is included in the transit point obtained by the transit point selection processing (step S104). The warehouse described here is a component warehouse in which the components are stored. In a case where the transit point includes the warehouse (Yes in step S104), addition processing is performed (step S105), acquisition processing is performed (step S106), and determination processing is performed (step S107). The addition processing, the acquisition processing, and the determination processing are performed by the surplus component specifying unit 44 (see Fig. 3) described above.

The addition processing of step S105 is processing of predicting the components necessary for the maintenance work of each of a plurality of image forming devices in a predetermined area and adding together the components. The acquisition processing of step S106 is processing of acquiring record information that is information indicating the components used for the maintenance work already performed for each of the plurality of image forming devices in the predetermined area. The determination processing of step S107 is processing of determining the surplus components based on the results of the addition processing and the acquisition processing.

Such a surplus component is a component that is not used for the maintenance work of the image forming device currently handled by the person in charge specified in step S102, and is a component that is scheduled to be used for the maintenance work of another image forming device that has not yet become apparent.

Then, creation processing of creating instruction information displayed on the terminal device 20 of the person in charge is performed (step S108), transmission processing of transmitting the instruction information to the terminal device 20 of the person in charge is performed (step S109), and the processing ends.

In a case where a result of the determination in step S104 indicates that the warehouse is included in the transit point (Yes in step S104), the instruction information obtained by the creation processing of step S108 indicates a result of the prediction obtained by the prediction processing of step S101 and a result of the determination obtained by the determination processing of step S107, and a result of the selection obtained by the transit point selection processing of step S103. The creation processing is performed by the instruction creation unit 45 (see Fig. 3) described above.

In a case where the result of the determination in step S104 indicates that the warehouse is not included in the transit point (No instep S104), the processing proceeds to step S109. The instruction information created in this case indicates the result of the prediction obtained by the prediction processing of step S101 and the result of the selection obtained by the transit point selection processing of step S103.

### <Prediction Processing>

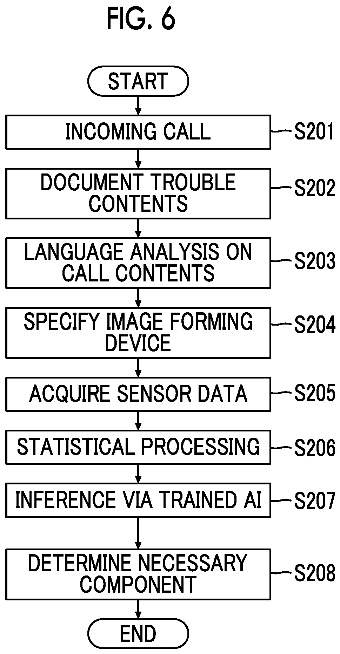

Next, the prediction processing of step S101 in Fig. 5 will be described in more detail with reference to Fig. 6.

Fig. 6 is a flowchart showing an example of the prediction processing of step S101 in Fig. 5. The prediction processing is performed by the prediction unit 41 (see Fig. 3) described above.

In the example shown in Fig. 6, in a case where an incoming call from the customer is made (step S201), trouble contents are documented including a number of the image forming device of the customer and incoming call contents (step S202). The maintenance request is received by the documentation of the trouble contents.

The number of the image forming device of the customer is information indicating the image forming device used by the customer who makes the call, and is, for example, a number assigned in advance. Such a number can be acquired from a customer name, and can also be acquired by having the customer check the number attached to the image forming device. It is possible to determine whether or not the customer who has made the call has a maintenance contract based on the customer name or the number of the image forming device.

Examples of the incoming call contents include "There is a streak during printing".

The incoming call from the customer is made to the customer center, and a case of reception via an automatic voice response is also considered in addition to a case of reception via an operator response. The call contents of the incoming call are recorded and stored in, for example, the database 30 (see Fig. 1).

Then, the language analysis is performed on the recorded call contents (step S203), and the information included in the call contents is vectorized. For example, a vector of the number of occurrences of a predetermined word is generated. Here, it is assumed that four predetermined words are "print", "copy", "sound", and "streak", and the words "print" and "streak" appear once each in text of the call contents. In this case, a vector is generated such that a portion corresponding to "print" and "streak" is 1 and a portion corresponding to "copy" and "sound" is 0. That is, a vector of " 1, 0, 0, 1" is generated as a vector representing the call contents. In addition to this vector, a word vector representation, such as Word2Vec, may be used.

In addition, the corresponding image forming device is specified from the number of the image forming device of the customer (step S204). Accordingly, the server device 10 can access the image forming device 100 via the communication line 80 (see Fig. 1). The image forming device 100 holds various logs or data of a sensor of the image forming device 100.

The server device 10 acquires the sensor data of the image forming device 100 (step S205). Examples of the sensor data include the number of cycles of a drum of the photosensitive unit 140 (see Fig. 4) of each color. The server device 10 can acquire, for example, data of the number of cycles of a Y-color drum, the number of cycles of an M-color drum, the number of cycles of a C-color drum, and the number of cycles of a K-color drum.

The acquired sensor data is subjected to statistical processing of normalizing the sensor data with, for example, an assumed number of cycles at the time of design (step S206). By the normalization, for example, the results can be obtained, such as the number of cycles of the Y-color drum of 0.127, the number of cycles of the M-color drum of 0.269, the number of cycles of the C-color drum of 0.307, and the number of cycles of the K-color drum of 0.564.

Thereafter, an inference via a trained AI is performed based on the language analysis of step S203 and the statistical processing of step S206 (step S207), and the necessary components are determined (step S208).

Such an inference uses a machine learning model trained using trouble cases recorded in the past. That is, for the trouble that has occurred in the past, a result of the language analysis of step S203 and a result of the statistical processing of step S206 are associated with the component used by the person in charge in a case of responding to the trouble, and a pattern of the association is learned in advance by the machine learning model. For example, in a method using a neural network, the result of the language analysis of step S203 and the result of the statistical processing of step S206 are input, the presence or absence of use of the component as a replacement candidate is output, and parameters are adjusted in accordance with the input and output pattern. A result of the inference is output as a value of 0 to 1.

In a case where 0.5 is set as a threshold value, it is considered that the determination of the necessary components is performed by holding the components having an inference result exceeding the threshold value, in order of highest score. The necessary components described here are components having a possibility of being used for the maintenance of the image forming device of the customer who has made the incoming call.

As described above, in the prediction processing, the vectorization of the language and the preprocessing of the sensor data are performed, and the necessary components are determined by a trained machine learning module.

### <Person-In-Charge Specifying Processing>

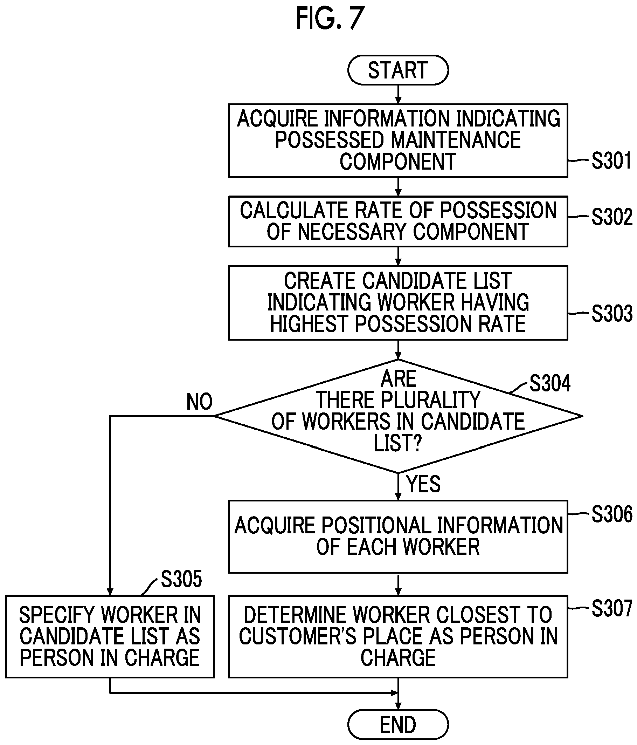

Next, the person-in-charge specifying processing of step S102 in Fig. 5 will be described in more detail with reference to Fig. 7.

Fig. 7 is a flowchart showing an example of the person-in-charge specifying processing of step S 102 in Fig. 5. The person-in-charge specifying processing is performed by the person-in-charge specifying unit 42 (see Fig. 3) described above.

In the example shown in Fig. 7, the person in charge is determined based on positional information of the plurality of workers who perform the maintenance work or the components possessed by the plurality of workers. The components described here may include components that are brought for the maintenance work but are not used, and the surplus components specified by the surplus component specifying unit 44 (see Fig. 3), and may be referred to as "maintenance components" and "possessed components" below.

More specifically, first, information indicating the maintenance components possessed by each of the plurality of workers is acquired (step S301). Then, a rate of the possession of the necessary components is calculated for each worker as the result of the prediction processing (see step S101) (step S302). That is, the rate of the necessary components to the maintenance components possessed by each worker is calculated as a possession rate. For example, the possession rate is 100% in a case where all of the necessary components are included in the maintenance components, and the possession rate is 50% in a case where half of the necessary components are included in the maintenance components.

A candidate list indicating the worker having the highest possession rate is created (step S303). It is checked whether or not there are a plurality of workers shown in the candidate list (step S304).

In a case where there are not the plurality of workers shown in the candidate list (No instep S304), the worker in the candidate list is specified as the person in charge (step S305).

In a case where there are the plurality of workers shown in the candidate list (Yes in step S304), the positional information is acquired for each worker in the candidate list (step

S306). Then, the worker closest to the customer's place is specified as the person in charge (step S307).

As described above, in the person-in-charge specifying processing, the result of the prediction of the necessary components is compared with the maintenance components possessed by the worker, the worker having a high possession rate of the necessary components is selected, and, in a case where there is only one selected worker, the selected worker is specified as the person in charge. On the other hand, in a case where there are a plurality of workers having the same possession rate, the worker who is at the closest position based on positional information of the customer's place is specified as the person in charge.

### <Transit Point Selection Processing>

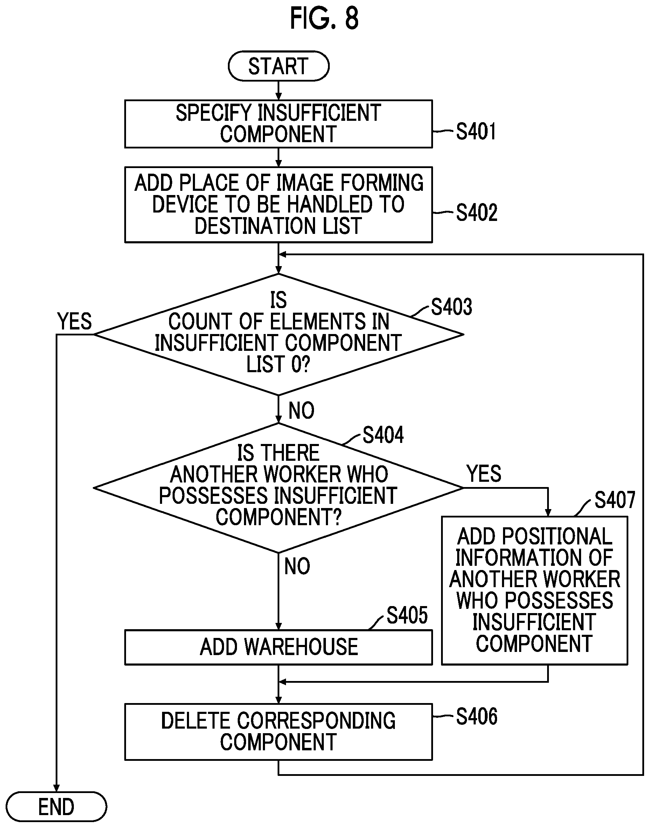

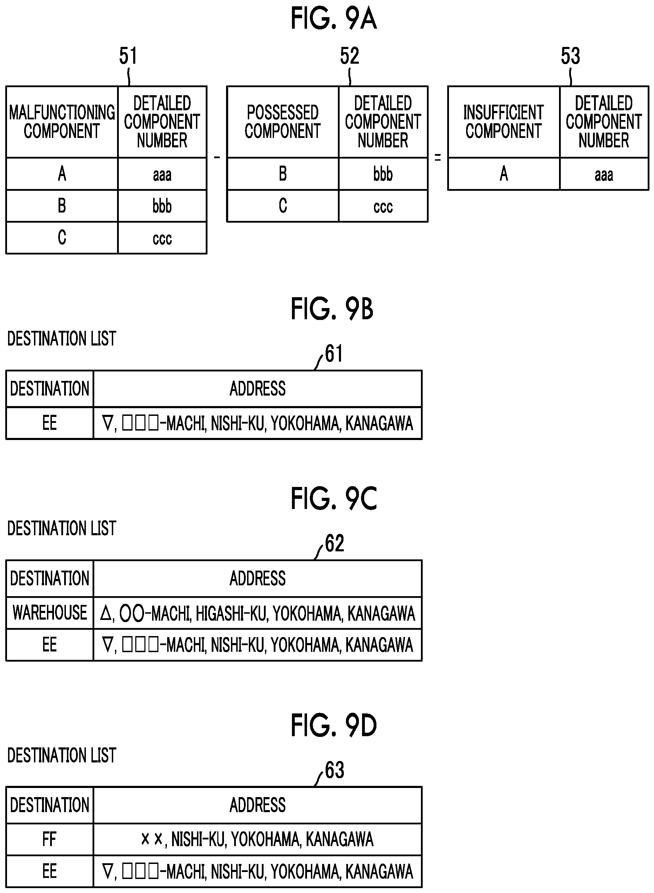

Next, the transit point selection processing of step S103 in Fig. 5 will be described in more detail with reference to Figs. 8 and 9A to 9D.

Fig. 8 is a flowchart showing an example of the transit point selection processing of step S103 in Fig. 5. Figs. 9A to 9D are diagrams showing an example of the transit point selection processing, in which Fig. 9A is a diagram showing creation of a list 51 of insufficient components, and Figs. 9B to 9D are diagrams showing an example of destination lists 61, 62, and 63. The transit point selection processing is performed by the transit point selection unit 43 (see Fig. 3) described above.

In the example shown in Fig. 8, the destination list is created based on whether the necessary components are sufficient or insufficient in the person-in-charge specifying processing. That is, the transit point is added to the destination list such that another worker who possesses the insufficient component or the warehouse in which the insufficient component is stored is passed.

More specifically, first, the insufficient component, which is a difference between the necessary components in step S101 and the possessed components in step S102, are specified (step S401).

For example, in an example shown in Fig. 9A, the malfunctioning components are A, B, and C in the list 51, and detailed component numbers of the malfunctioning components A, B, and C are aaa, bbb, and ccc. In addition, in the list 52, the components possessed by the person in charge are components having the detailed component numbers bbb and ccc. Therefore, as the insufficient component shown in the list 53, the component having the detailed component number aaa is specified. The detailed component number described here are a model number and corresponds to the above-described component name. The above-described component name may be referred to as a name of the component. That is, the above-described component name is information for specifying the component, and includes the model number of the component or the name of the component.

In addition, the customer's place, that is, a place of the image forming device 100 for which the maintenance work is performed is added to the destination list (step S402).

For example, the destination list 61 shown in Fig. 9B is obtained in step S402, and includes information on the destination and the address. In addition, in the destination list 61, as the destination, EE that is the customer's place and an address of EE are shown.

It is determined whether or not the count of elements in the list of the insufficient components is zero (0) (step S403). In a case where the count of elements is 0 (Yes in step S403), since it is not necessary to replenish the components to be brought to the customer's place, the destination list is confirmed as the contents shown in Fig. 9B, and the processing ends.

On the other hand, in a case where the count of elements of the insufficient components is not 0 (No instep S403), it is determined whether or not there is another worker who possesses the insufficient component in the predetermined area (step S404).

In a case where there is no another worker (No instep S404), the warehouse in which the components are stored is added to the destination list as the transit point (step S405).

For example, in the destination list 62 shown in Fig. 9C, the "warehouse" is added to the destination list 61 shown in Fig. 9B described above.

Then, the corresponding component (the component of "detailed component number is aaa" in Fig. 9A) is deleted from the list of the insufficient components (see the list 53 in Fig. 9A) specified in step S401 (step S406), and the processing returns to step S403.

In addition, in a case where there is another worker (Yes in step S404), the positional information of another worker who possesses the insufficient component is added to the destination list as the transit point (step S407).

For example, in the destination list 63 shown in Fig. 9D, "FF" at which another worker is located is added to the destination list 61 shown in Fig. 9B described above.

After proceeding to step S406, the processing returns to step S403.

### <Addition Processing>

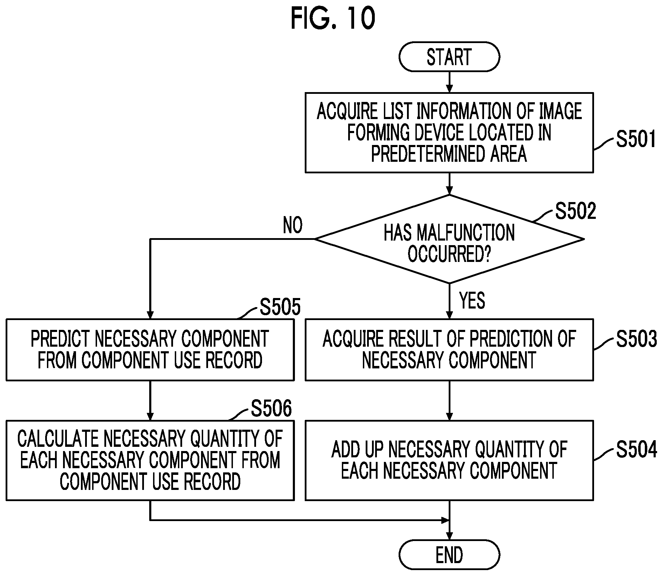

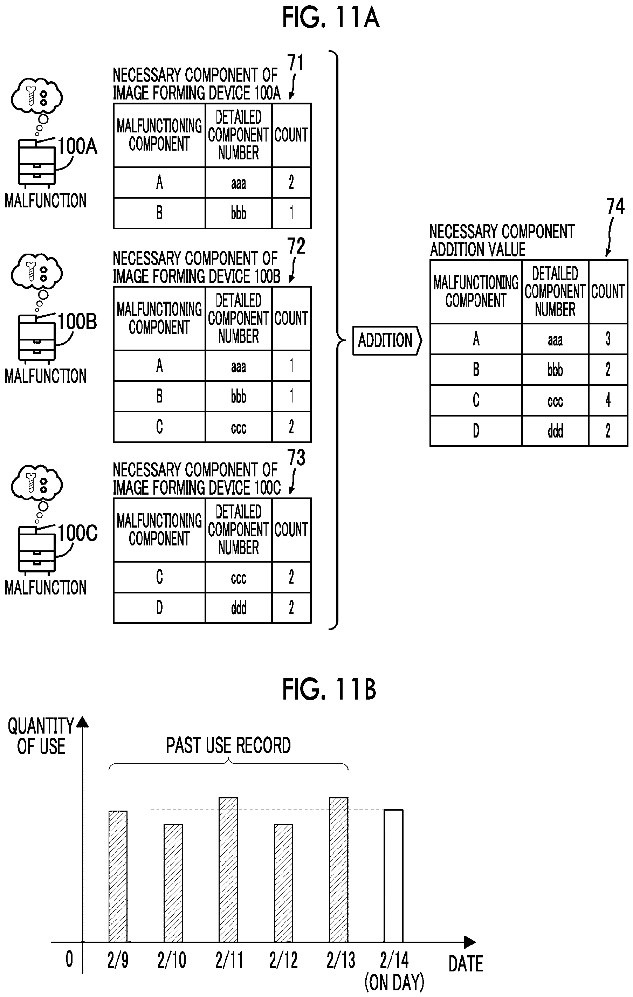

Next, the addition processing of step S105 (see Fig. 5) will be described in more detail with reference to Figs. 10 and 11A to 11B.

Fig. 10 is a flowchart showing an example of the addition processing of step S105 in Fig. 5. Figs. 11A and 11B are diagrams showing the addition processing, in which Fig. 11A is a diagram showing processing of step S504 in Fig. 10, and Fig. 11B is a diagram showing processing of step S506 in Fig. 10. The addition processing is performed by the surplus component specifying unit 44 (see Fig. 3) described above.

In the example shown in Fig. 10, list information of the image forming device 100 in the predetermined area is acquired (step S501). Then, it is determined whether or not the malfunction has occurred in the image forming device 100 included in the acquired list information (step S502).

In a case where there is the image forming device 100 in which the malfunction has occurred (Yes in step S502), the result of the prediction of the necessary components in the image forming device 100 (see step S208 in Fig. 6) is acquired (step S503). In addition to a case where the quantity of the image forming devices 100 that have malfunctioned is one, a case is also considered in which the quantity of the image forming devices 100 that have malfunctioned is plural.

The result of the prediction of the necessary component includes information indicating the component name of the necessary component and the quantity of the component name. The necessary quantity of each necessary component is added up (step S504), and the processing ends.

In a case where the quantity of the image forming devices 100 that have malfunctioned is one, the necessary quantity of each necessary component is the same as the result of the prediction, and in a case where the quantity of the image forming devices 100 that have malfunctioned is plural, the necessary quantity of each necessary component is a value obtained by adding together the necessary quantities of the necessary components.

On the other hand, in a case where there is no image forming device 100 in which the malfunction has occurred (No instep S502), the component that is expected to be necessary for each component is predicted as the necessary component from a past component use record for the predetermined area (step S505). Such a prediction is considered to be performed by a prediction method using a time-series model, such as an autoregressive model. It is also considered to perform such prediction via the prediction unit 41 (see Fig. 3) described above.

The necessary quantity for each necessary component is calculated from the past component use record (step S506), and the processing ends.

Here, in a case of Fig. 11A showing step S504 (see Fig. 5) described above, the malfunction has occurred in three image forming devices 100A, 100B, and 100C.

As shown in a list 71, the result of the prediction of the necessary components for all the malfunctions that have occurred (see step S208 in Fig. 6) indicates that the necessary components of the image forming device 100A are the malfunctioning components A and B. As shown in a list 72, the necessary components of the image forming device 100B are the malfunctioning components A, B, and C. As shown in a list 73, the necessary components of the image forming device 100C are the malfunctioning components C and D.

The detailed component number of the malfunctioning component A is aaa, the detailed component number of the malfunctioning component B is bbb, the detailed component number of the malfunctioning component C is ccc, and the detailed component number of the malfunctioning component D is ddd.

As shown in the list 71 shown in Fig. 11A, the count of the malfunctioning components A as the necessary components of the image forming device 100A is two, and the count of the malfunctioning components B is one. As shown in the list 72, the count of the malfunctioning components A as the necessary components of the image forming device 100B is one, the count of the malfunctioning components B is one, and the count of the malfunctioning components C is two. As shown in the list 73, the count of the malfunctioning components C as the necessary components of the image forming device 100C is two, and the count of the malfunctioning components D is two.

Therefore, as necessary component addition value, which is an added necessary quantity for each component, as shown in a list 74 shown in Fig. 11A, the count of the malfunctioning components A is three, the count of the malfunctioning components B is two, the count of the malfunctioning components C is four, the count of the malfunctioning components D is two. The list 74 is an example of the quantity in the result of the prediction.

In a case of Fig. 11B showing step S506 described above, the necessary quantity of the predicted necessary components (see step S505) is calculated from the past component use record. More specifically, in a bar graph in which a vertical axis is quantity of use and a horizontal axis is a date, quantity of use on each day after February 9 is represented as the past component use record. For example, an average quantity of uses in the past 5 days is used to calculate the necessary quantity of uses on the day (February 14). Such a calculation is performed for each necessary component.

### <Acquisition Processing>

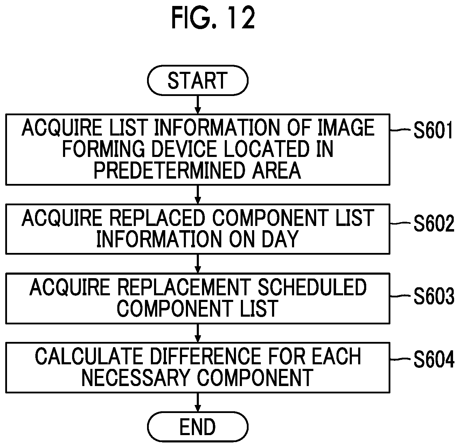

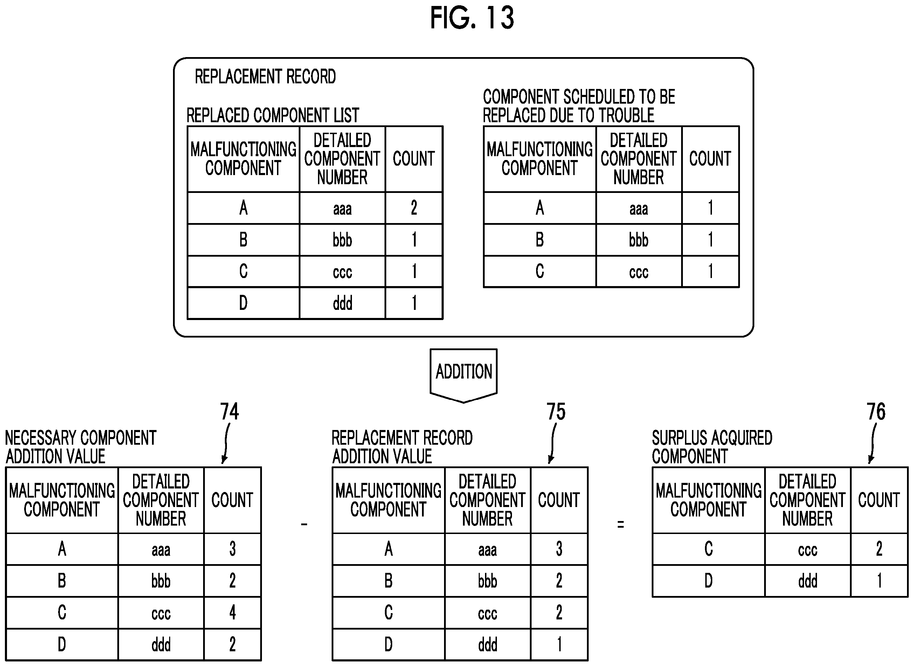

Next, the acquisition processing of step S106 (see Fig. 5) will be described in more detail with reference to Figs. 12 and 13.

Fig. 12 is a flowchart showing an example of the acquisition processing of step S106 in Fig. 5, and Fig. 13 is a diagram showing a surplus acquired component. The acquisition processing is performed by the surplus component specifying unit 44 (see Fig. 3) described above.

In the example shown in Fig. 12, the list information of the image forming device 100 in the predetermined area is acquired (step S601).

In addition, replaced component list information on the day is acquired for the image forming device 100 included in the acquired list information (step S602).

Further, a replacement scheduled component list, which is the list information on the components scheduled to be replaced due to the malfunction that has occurred this time, is acquired (step S603).

Then, a difference for each necessary component is calculated by using the acquired replaced component list information and replacement scheduled component list information, and the necessary component addition value (step S604).

A more specific description will be made.

As shown in Fig. 13, in the replaced component list information acquired in step S602, the count of the malfunctioning components A is two, the count of the malfunctioning components B is one, the count of the malfunctioning components C is one, and the count of the malfunctioning components D is one. In the replacement scheduled component list information acquired in step S603, the count of the malfunctioning components A is one, the count of the malfunctioning components B is one, and the count of the malfunctioning components C is one.

A list 75 shows a replacement record addition value obtained by adding together the count in the replaced component list information and the count in the replacement scheduled component list information, for each necessary component. That is, according to the list 75, the count of the malfunctioning components A is three, the count of the malfunctioning components B is two, the count of the malfunctioning components C is two, and the count of the malfunctioning components D is one.

The replacement record addition value is an example of the quantity of use based on the received maintenance request.

As the necessary component addition value acquired in step S504, as shown in the above-described list 74 (see Fig. 11A), the count of the malfunctioning components A is three, the count of the malfunctioning components B is two, the count of the malfunctioning components C is four, and the count of the malfunctioning components D is two. The list 74 is an example of the quantity in the result of the prediction.

As the surplus acquired component, which is the difference calculated by subtracting the list 75 from the list 74 for each component, the count of the malfunctioning components A is 0, the count of the malfunctioning components B is 0, the count of the malfunctioning components C is two, the count of the malfunctioning components D is one. As a result, a surplus acquired component list 76 including the respective counts of the malfunctioning component C and the malfunctioning component D is generated.

The surplus acquired component list 76 is an example of a list in which a subtracted quantity calculated by subtracting the quantity of use based on the received maintenance request from the quantity in the result of the prediction is calculated for each component name, and the malfunctioning component having the count in the calculated result is one or more and the count of the malfunctioning component are listed.

The surplus acquired component list 76 indicates the components having a possibility of being used for the maintenance on the day of the prediction. In addition, a case where the list 75 indicates a list obtained by adding together the quantity in which the maintenance work is performed on the day of the prediction and the quantity in which the maintenance work is scheduled to be performed is also considered in addition to a case where the list 75 indicates the quantity in the maintenance request received on the day of the prediction.

As described above, the surplus acquired component list 76 is a value obtained by subtracting the replacement record addition value, which is a use component record, from the necessary component addition value, which is an accumulation of the necessary components predicted for the plurality of image forming devices 100A to 100C. The surplus acquired component list 76 indicates a brought-in recommended amount, that is, components for exchange.

The brought-in recommended amount is not limited to this calculation, and it is also considered to obtain the brought-in recommended amount for each of the plurality of image forming devices 100A to 100C and to use the addition value of the brought-in recommended amounts.

### <Determination Processing>

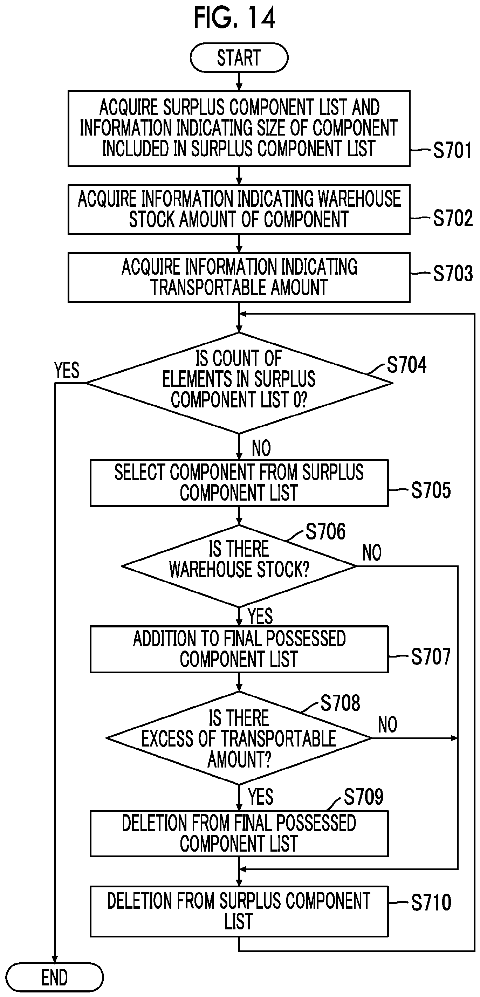

Next, the determination processing of step S 107 (see Fig. 5) will be described in more detail with reference to Figs. 14, 15A to 15D, and 16.

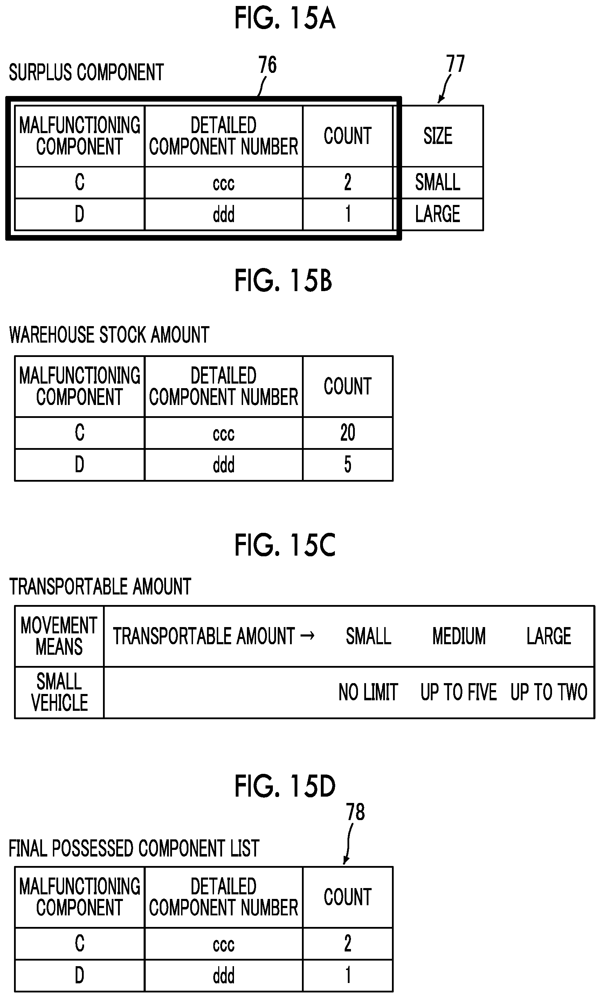

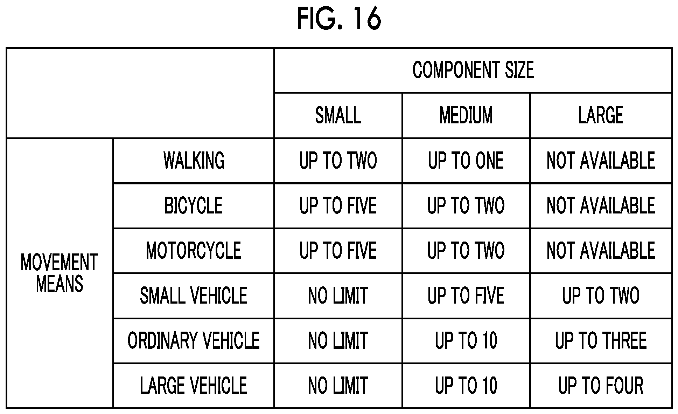

Fig. 14 is a flowchart showing an example of the determination processing of step S107 in Fig. 5. Figs. 15A to 15D are diagrams showing the determination processing, in which Fig. 15A is a diagram showing processing of step S701 in Fig. 14, Fig. 15B is a diagram showing processing of step S702 in Fig. 14, Fig. 15C is a diagram showing processing of step S703 in Fig. 14, and Fig. 15D is a diagram showing processing of step S709 in Fig. 14. Fig. 16 is a diagram showing information in a case where a transportable amount is determined in step S708 in Fig. 14. The determination processing is performed by the surplus component specifying unit 44 (see Fig. 3) described above.

In the example shown in Fig. 14, a surplus component list and information indicating a size of the component included in the surplus component list are acquired (step S701). As described above, the surplus component list includes information indicating the respective counts of the malfunctioning component C and the malfunctioning component D. Therefore, as the information on the component sizes of the malfunctioning component C and the malfunctioning component D, information indicating that the size of the malfunctioning component C is "small" and the size of the malfunctioning component D is "large" is acquired. As a result, as shown in Fig. 15A, a surplus component list 77 in which a size field is added to the surplus acquired component list 76 (see Fig. 13) is created.

The size in the size field described here indicates a degree of a size of an outer shape, and is a guideline in a case where the person in charge brings the components to a visiting place. The size is determined in advance for each component.

Then, as shown in Fig. 14, information indicating a warehouse stock amount of the component included in the surplus component list is acquired (step S702). The warehouse stock amount described here indicates a stock amount for each component stored in the warehouse, and is sequentially updated.

As a result, as shown in Fig. 15B, as the information on the warehouse stock amounts of the malfunctioning component C and the malfunctioning component D, a stock amount of the malfunctioning component C is 20, and a stock amount of the malfunctioning component D is five. According to the surplus component list, since the count of the malfunctioning components C is two and the count of the malfunctioning components D is one, it is possible to confirm that there is stock.

As shown in Fig. 14, information indicating the transportable amount of the person in charge is acquired (step S703). Such a transportable amount is the count in accordance with the size, and is determined in advance in accordance with movement means for the person in charge to move to the visiting place.

As shown in Fig. 15C, the movement means of the person in charge is a small four-wheeled vehicle, not a motorcycle or the like. In a case of the small vehicle, the transportable amount is not limited in a case where the size is "small", is up to five in a case where the size is "medium", and is up to two in a case where the size is "large".

Here, in accordance with a table that defines the transportable amount shown in Fig. 16, six types of "walking", "bicycle", "motorcycle", "small vehicle", "ordinary vehicle", and "large vehicle" are set as the movement means. In a case of "walking", the transportable amount is up to two in a case where the size is "small", is up to one in a case where the size is "medium", and the transport is not available in a case where the size is "large". In a case of "bicycle" and "motorcycle ", the transportable amount is up to five in a case where the size is "small", is up to two in a case where the size is "medium", and the transport is not available in a case where the size is "large". In a case of "ordinary vehicle", the transportable amount is not limited in a case where the size is "small", is up to 10 in a case where the size is "medium", and is up to three in a case where the size is "large". In a case of "large vehicle", the transportable amount is not limited in a case where the size is "small", is up to 10 in a case where the size is "medium", and is up to four in a case where the size is "large".

In the processing example shown in Fig. 14, after step S703, it is determined whether or not the necessary component of the surplus acquired component list 76 (see Fig. 13) is added to a final brought-in component list 78 (see Fig. 15D) in accordance with the presence or absence of the warehouse stock and the presence or absence of the excess of the transportable amount. The determined necessary component of the surplus acquired component list 76 is deleted from the surplus acquired component list 76. The count of elements in the surplus acquired component list 76 is reduced by repeating such processing. Such processing is performed until the count of elements of the surplus acquired component list 76 becomes zero (0).

A specific description will be made.

As shown in Fig. 14, it is determined whether or not the count of elements in the surplus component list becomes zero (0) (step S704). In a case where the count of elements is 0 (Yes in step S704), the processing ends.

On the other hand, in a case where the count of elements in the surplus component list is not zero (0) (No instep S704), the component is selected from the surplus component list (step S705), and it is checked whether or not the selected component and the quantity of the component are present in the warehouse (step S706).

In a case where the selected component is present in the warehouse (Yes in step S706), the selected component is added to the final brought-in component list (step S707). Then, it is checked whether or not there is the excess of the transportable amount in the final brought-in component list after addition (step S708).

In a case where there is the excess of the transportable amount (Yes in step S708), the added component is deleted from the final brought-in component list (step S709).

On the other hand, in a case where there is no excess of the transportable amount (No instep S708), the component selected in step S705 is deleted from the surplus component list (step S710), and the processing returns to step S704.

In a case where the selected component is not present in the warehouse (No instep S706), the processing proceeds to step S710 described above, and returns to step S704.

By such processing, the final brought-in component list 78 shown as an example in Fig. 15D is created. In the final brought-in component list 78, the count of the malfunctioning components C is two, and the count of the malfunctioning components D is one.

The final brought-in component list 78 shown in Fig. 15D is ultimately the same as the surplus component list 77 or the surplus acquired component list 76 (see Fig. 13) of Fig. 15A. The reason is that the two malfunctioning components C and one malfunctioning component D are present in the warehouse stock (Yes in step S706), and there is no excess of the transportable amount (No instep S708). The quantity in the final brought-in component list is less than the amount of the components that can be brought by the person in charge. In addition, since the quantity of the final brought-in component list is less than the storage amount in the warehouse, it is possible to avoid the time and effort of going to another place to search for the component that is not in the warehouse.

In addition, a processing example is also considered in which the determination processing shown in Fig. 14 is omitted and the surplus acquired component list 76 of Fig. 13 is used as the final brought-in component list 78.

### <Brought-In Component List 91>

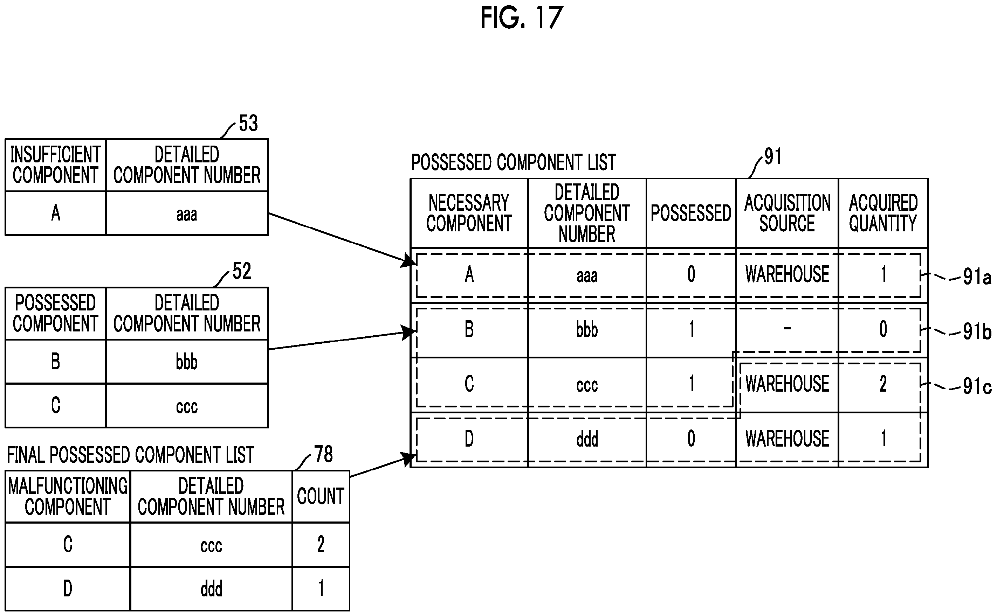

Next, the brought-in component list 91 included in the instruction created by the creation processing of step S108 (see Fig. 5) in the server device 10 (see Fig. 1) will be described with reference to Fig. 17.

Fig. 17 is a diagram showing the brought-in component list 91.

As shown in Fig. 17, the brought-in component list 91 includes items of "necessary component", "detailed component number", "possessed", "acquisition source", and "acquired quantity". In addition, the brought-in component list 91 includes a portion 91a corresponding to the list 53 (see Fig. 9A), a portion 91b corresponding to the list 52 (see Fig. 9A), and a portion 91c corresponding to the final brought-in component list 78 (see Fig. 15D).

Since the portion 91a corresponds to the insufficient component in the list 53, it is shown that one malfunctioning component A is acquired from the warehouse.

Since the portion 91b corresponds to the possessed component in the list 52, it is shown that one malfunctioning component B and one malfunctioning component C are possessed.

Since the portion 91c corresponds to the final brought-in component list 78, it is shown that two malfunctioning components C and one malfunctioning component D are acquired from the warehouse.

More specifically, the portion 91a and the portion 91b indicate the components to be brought by the person in charge because there is a high possibility of being used for the maintenance of the image forming device 100 for which the maintenance request is issued, while the portion 91c indicates the component to be brought by the person in charge from the warehouse in preparation for the maintenance work for which the maintenance request is not yet issued.

The portion 91a and the portion 91b of the brought-in component list 91 are examples of information indicating a component name and a quantity of the component name for the maintenance work, and the portion 91c is an example of information indicating a component name and a quantity of the component name based on the result of the prediction.

### < Instruction 90>

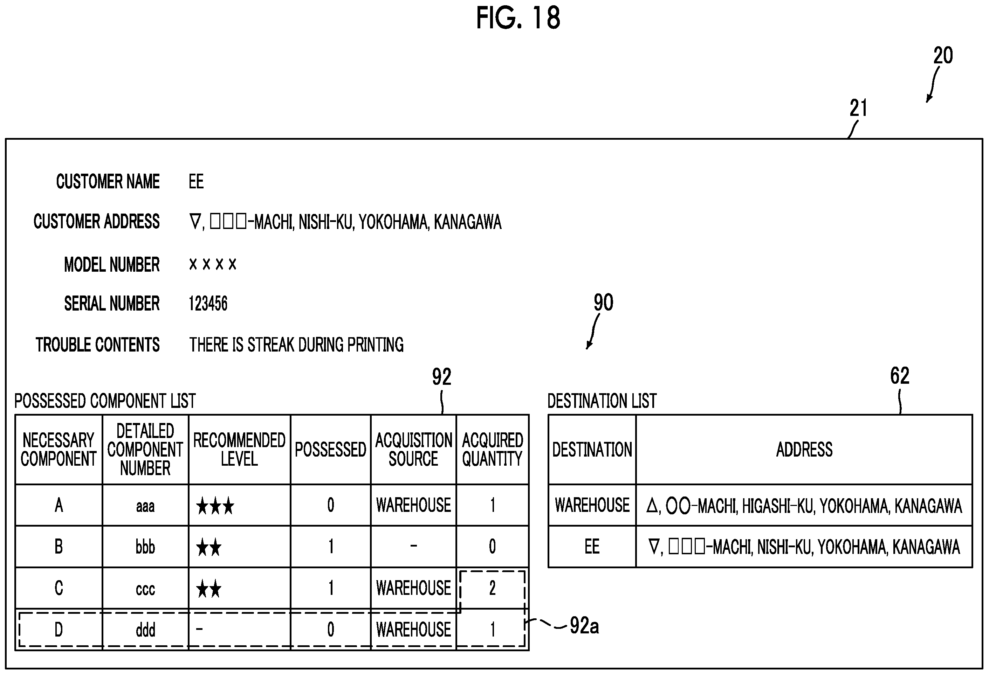

Next, an instruction 90 displayed on a display unit 21 of the terminal device 20 will be described with reference to Fig. 18.

Fig. 18 is a diagram showing the instruction 90 displayed on the display unit 21 of the terminal device 20. The data of such an instruction 90 is generated including the brought-in component list 91 (see Fig. 17), and is transmitted from the server device 10 (see Fig. 1) to the terminal device 20 of the person in charge by the transmission processing (see step S109 in Fig. 5). As a result, the person in charge is notified of the details of the components to be brought. Such components to be brought includes not only the component to be brought from the warehouse but also the component possessed by the person in charge.

Fig. 18 shows a state in which the instruction 90 is displayed on the display unit 21 of the terminal device 20. The instruction 90 shown in Fig. 18 includes items of "customer name", "customer address", "model", "serial number", and "trouble contents". In addition, the instruction 90 also includes the brought-in component list 91 and the destination list 62.

The brought-in component list 92 of the instruction 90 is obtained by adding a "recommended level" to the above-described brought-in component list 91 (see Fig. 17). The recommended level described here indicates a degree of a possibility of being used for the maintenance in a case of performing the maintenance work of the image forming device 100, and, in the present example, the degree of the possibility is represented by the count of stars.

The destination list 62 of the instruction 90 shows the names and addresses of the warehouse and the EE of the customer's place. Accordingly, the person in charge can check the work contents indicating stopping at the warehouse to bring the component before visiting the customer's place.

In addition, as shown by an enclosing line 92a of the brought-in component list 92, it is possible to check that two malfunctioning components C and one malfunctioning component D are acquired from the warehouse.

As described above, the components in the brought-in component list 91 are within the transportable amount range of the person in charge, and the person in charge can smoothly move to the customer's place.

### <Predetermined Area>

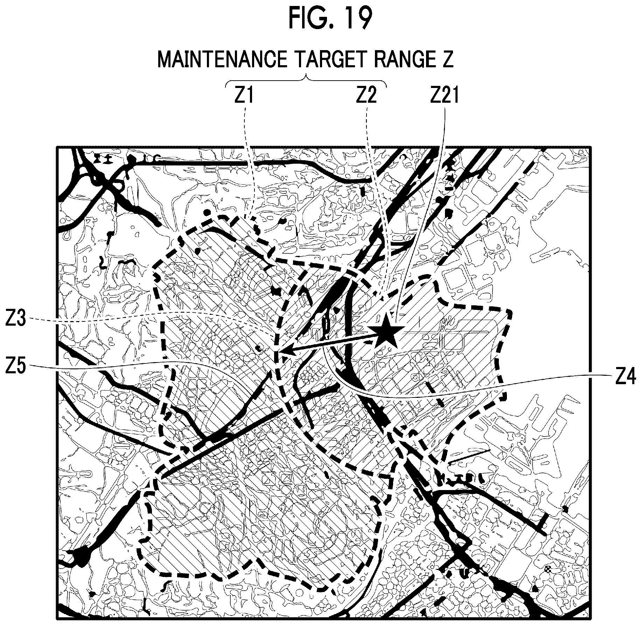

Here, the predetermined area described above will be described with reference to Fig. 19.

Fig. 19 is a diagram showing an example of the predetermined area Z1.

In the example shown in Fig. 19, a maintenance target range Z for which the maintenance is performed by the plurality of workers is set in advance. As the maintenance target range Z, a geographical range is set by division into the predetermined area Z1 and an area Z2 other than the area Z1. Therefore, in a case where the maintenance request is received, the maintenance work is performed by the worker regardless of whether the customer's place is located in the area Z1 or the area Z2.

In Fig. 19, a boundary line Z3 between the area Z1 and the area Z2 is shown by a broken line. In addition, in Fig. 19, a range of the area Z1 is shown by a right downward diagonal line, and a range of the area Z2 is shown by a left downward diagonal line.

A warehouse Z21 in which the components are stored is located in the area Z2. Therefore, in a case where the maintenance work is performed by visiting the customer's place in the area Z2, it is considered that the maintenance workability is unlikely to deteriorate even in a case where the worker stops at the warehouse Z21 each time there is the insufficient component. In Fig. 19, a star mark is attached to a position of the warehouse Z21.

On the other hand, the warehouse Z21 is not located in the area Z1. In a case where the customer's place is located in the area Z1, the maintenance workability is deteriorated in a case where the worker stops at the warehouse Z21 each time there is the insufficient component. Therefore, the surplus components for exchange (for example, see the list 77 in Fig. 15A) are brought only in a case where the maintenance of the image forming device in the area Z1 is performed (for example, see step S501 in Fig. 10). That is, in a case where the customer's place is located in the area Z1, the cost of returning to the warehouse Z21 is reduced, and the components are exchanged with each other, so that it is possible to efficiently perform the maintenance work.

More specifically, the area Z1 shown in Fig. 19 has a range separated from the warehouse Z21 by a predetermined distance Z4 or more as the geographical range. That is, the boundary line Z3 is an arc-shaped curve having a radius of the distance Z4 centered on the warehouse Z21. In a case where the area Z1 is set based on the straight line distance to the warehouse Z21, the area Z1 can be easily set.

The setting of the area Z1 is not limited to being based on the straight line distance. For example, the area Z1 is crossed by a railway line Z5. There may be a case where a road with a large amount of traffic is crossed. Therefore, the movement distance or the movement time of the maintenance worker with respect to the warehouse is not increased and decreased in accordance with the straight line distance even in the area Z1. Therefore, an example is also considered in which the area Z1 is set to a range in which the movement distance or the movement time in a case of movement from the warehouse as a start point is equal to or more than a predetermined value. In such an example, it is possible to perform the setting in accordance with the actual situation.

### <Description of Program>

The processing performed by the server device 10 in the present exemplary embodiment described above is prepared as a program, such as software. The program for implementing the present exemplary embodiment may be provided not only by communication means but also by being stored in a recording medium, such as a CD-ROM.

Although the exemplary embodiment of the present invention has been described above, the technical scope of the exemplary embodiment of the present invention is not limited to the exemplary embodiment described above. Various modifications and alternative configurations that do not depart from the scope of the technical concept of the present invention are included in the present invention. The present invention can also be applied to a program and a program product.

### <Supplementary Note>

(((1))) An information processing system comprising:
   one or more processors configured to:
   predict component names having a possibility of being used for maintenance of a plurality of devices determined in advance and quantities of the component names; and
   notify, in a case where a maintenance request is received for a device among the plurality of devices, a person in charge, who is in charge of maintenance work for the device and who is determined from among a plurality of workers, of information indicating a component name and a quantity of the component name for the maintenance work and information indicating a component name and a quantity of the component name based on a result of the prediction, as details of components to be brought.
(((2))) The information processing system according to (((1))),
   wherein the information indicating the component name and the quantity of the component name based on the result of the prediction indicates a component name having a subtracted quantity equal to or more than 1 and a quantity of the component name, the subtracted quantity being calculated, for each component name, by subtracting a quantity of use in the received maintenance request from the quantity in the result of the prediction.
(((3))) The information processing system according to (((2))),
   wherein the result of the prediction indicates a component name having a possibility of being used in the maintenance on a day of the prediction, and
   the quantity of use in the received maintenance request is a quantity of use in the maintenance request received on the day of the prediction.
(((4))) The information processing system according to (((2))),
   wherein the result of the prediction indicates a component name having a possibility of being used in the maintenance on a day of the prediction, and
   the quantity of use in the received maintenance request is a value obtained by adding together a quantity in which the maintenance work is performed on the day of the prediction and a quantity in which the maintenance work is scheduled to be performed on the day of the prediction.
(((5))) The information processing system according to any one of (((1))) to (((4))),
   wherein the quantity in the information indicating the component name and the quantity of the component name based on the result of the prediction is less than an amount of components that the person in charge is able to bring.
(((6))) The information processing system according to any one of (((1))) to (((4))),
   wherein, in a case where the components to be brought are brought from a storage place in which the components are stored,
   the quantity in the information indicating the component name and the quantity of the component name based on the result of the prediction is less than a storage amount in the storage place.
(((7))) The information processing system according to any one of (((1))) to (((6))),
   wherein the plurality of devices determined in advance are devices within a geographical range that does not include a storage place in which components are stored.
(((8))) The information processing system according to (((7))),
   wherein the geographical range is separated from the storage place by a predetermined distance or more.
(((9))) The information processing system according to (((7))),
   wherein the geographical range is a range in which a movement distance or a movement time in a case of movement from the storage place as a start point is equal to or more than a predetermined value.
(((10))) A program causing an information processing system to implement:
   a function of predicting component names having a possibility of being used for maintenance of a plurality of devices determined in advance and quantities of the component names; and
   a function of notifying, in a case where a maintenance request is received for a device among the plurality of devices, a person in charge, who is in charge of maintenance work for the device and who is determined from among a plurality of workers, of information indicating a component name and a quantity of the component name for the maintenance work and information indicating a component name and a quantity of the component name based on a result of the prediction, as details of components to be brought.

In the invention according to (((1))), the efficiency of the maintenance work can be improved as a whole as compared with a case where a configuration is not adopted in which components having a possibility of being used for maintenance of a plurality of devices determined in advance are predicted, and a person in charge brings the components in accordance with a result of the prediction.

In the invention according to (((2))), the processing burden can be reduced as compared with a case where a configuration is not adopted in which the information indicating the component name and the quantity of the component name based on the result of the prediction indicates a component name having a subtracted quantity equal to or more than 1 and a quantity of the component name, the subtracted quantity being calculated, for each component name, by subtracting a quantity of use in the received maintenance request from the quantity in the result of the prediction.

In the invention according to (((3))), the processing burden can be reduced as compared with a case where a configuration is not adopted in which the result of the prediction indicates a component name having a possibility of being used in the maintenance on a day of the prediction, and the quantity of use in the received maintenance request is a quantity of use in the maintenance request received on the day of the prediction.

In the invention according to (((4))), the accuracy of the prediction can be improved as compared with a case where a configuration is not adopted in which the result of the prediction indicates a component name having a possibility of being used in the maintenance on a day of the prediction, and the quantity of use in the received maintenance request is a value obtained by adding together a quantity in which the maintenance work is performed on the day of the prediction and a quantity in which the maintenance work is scheduled to be performed on the day of the prediction.

In the invention according to (((5))), the burden on the person in charge who brings the components can be reduced as compared with a case where a configuration is not adopted in which the quantity in the information indicating the component name and the quantity of the component name based on the result of the prediction is less than an amount of components that the person in charge is able to bring.

In the invention according to (((6))), the burden on the person in charge can be reduced as compared with a case where a configuration is not adopted in which, in a case where the components to be brought are brought from a storage place in which the components are stored, the quantity in the information indicating the component name and the quantity of the component name based on the result of the prediction is less than a storage amount in the storage place.

In the invention according to (((7))), the decrease in the efficiency of the maintenance work can be suppressed as compared with a case where a configuration is not adopted in which the plurality of devices determined in advance are devices within a geographical range that does not include a storage place in which components are stored.

In the invention according to (((8))), the geographical range can be easily set as compared with a case where a configuration is not adopted in which the geographical range is separated from the storage place by a predetermined distance or more.

In the invention according to (((9))), the geographical range can be set in accordance with an actual situation as compared with a case where a configuration is not adopted in which the geographical range is a range in which a movement distance or a movement time in a case of movement from the storage place as a start point is equal to or more than a predetermined value.

In the invention according to (((10))), the efficiency of the maintenance work can be improved as a whole as compared with a case where a configuration is not adopted in which components having a possibility of being used for maintenance of a plurality of devices determined in advance are predicted, and a person in charge brings the components in accordance with a result of the prediction.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: information processing system
10: server device
11a: CPU

## Claims

1. An information processing system comprising:
one or more processors configured to:
predict component names having a possibility of being used for maintenance of a plurality of devices determined in advance and quantities of the component names; and
notify, in a case where a maintenance request is received for a device among the plurality of devices, a person in charge, who is in charge of maintenance work for the device and who is determined from among a plurality of workers, of information indicating a component name and a quantity of the component name for the maintenance work and information indicating a component name and a quantity of the component name based on a result of the prediction, as details of components to be brought.

2. The information processing system according to claim 1,
wherein the information indicating the component name and the quantity of the component name based on the result of the prediction indicates a component name having a subtracted quantity equal to or more than 1 and a quantity of the component name, the subtracted quantity being calculated, for each component name, by subtracting a quantity of use in the received maintenance request from the quantity in the result of the prediction.

3. The information processing system according to claim 2,
wherein the result of the prediction indicates a component name having a possibility of being used in the maintenance on a day of the prediction, and
the quantity of use in the received maintenance request is a quantity of use in the maintenance request received on the day of the prediction.

4. The information processing system according to claim 2,
wherein the result of the prediction indicates a component name having a possibility of being used in the maintenance on a day of the prediction, and
the quantity of use in the received maintenance request is a value obtained by adding together a quantity in which the maintenance work is performed on the day of the prediction and a quantity in which the maintenance work is scheduled to be performed on the day of the prediction.

5. The information processing system according to any one of claims 1 to 4,
wherein the quantity in the information indicating the component name and the quantity of the component name based on the result of the prediction is less than an amount of components that the person in charge is able to bring.

6. The information processing system according to any one of claims 1 to 4,
wherein, in a case where the components to be brought are brought from a storage place in which the components are stored,
the quantity in the information indicating the component name and the quantity of the component name based on the result of the prediction is less than a storage amount in the storage place.

7. The information processing system according to any one of claims 1 to 6,
wherein the plurality of devices determined in advance are devices within a geographical range that does not include a storage place in which components are stored.

8. The information processing system according to claim 7,
wherein the geographical range is separated from the storage place by a predetermined distance or more.

9. The information processing system according to claim 7,
wherein the geographical range is a range in which a movement distance or a movement time in a case of movement from the storage place as a start point is equal to or more than a predetermined value.

10. A program causing an information processing system to implement:
a function of predicting component names having a possibility of being used for maintenance of a plurality of devices determined in advance and quantities of the component names; and
a function of notifying, in a case where a maintenance request is received for a device among the plurality of devices, a person in charge, who is in charge of maintenance work for the device and who is determined from among a plurality of workers, of information indicating a component name and a quantity of the component name for the maintenance work and information indicating a component name and a quantity of the component name based on a result of the prediction, as details of components to be brought.

11. An information processing method comprising:
predicting component names having a possibility of being used for maintenance of a plurality of devices determined in advance and quantities of the component names; and
notifying, in a case where a maintenance request is received for a device among the plurality of devices, a person in charge, who is in charge of maintenance work for the device and who is determined from among a plurality of workers, of information indicating a component name and a quantity of the component name for the maintenance work and information indicating a component name and a quantity of the component name based on a result of the prediction, as details of components to be brought.
